(19) Europäisches Patentamt

European Patent Office

Office européen des brevets

(11) Veröffentlichungsnummer : **0 069 868**
**B1**

(12) **EUROPÄISCHE PATENTSCHRIFT**

(45) Veröffentlichungstag der Patentschrift :
01.10.86

(21) Anmeldenummer : 82105205.7

(22) Anmeldetag : 15.06.82

(51) Int. Cl.⁴ : **F 02 D 13/02**

(54) **Nockenwellensteuergerät.**

(30) Priorität : 14.07.81 DE 3127766

(43) Veröffentlichungstag der Anmeldung :
19.01.83 Patentblatt 83/03

(45) Bekanntmachung des Hinweises auf die Patenterteilung : 01.10.86 Patentblatt 86/40

(84) Benannte Vertragsstaaten :
AT BE CH DE FR GB IT LI NL SE

(56) Entgegenhaltungen :
DE-A- 2 525 746
DE-A- 2 842 154
FR-A- 2 133 288
US-A- 3 682 152
US-A- 4 009 695

(73) Patentinhaber : FORD-WERKE AKTIENGESELLS-CHAFT
Ottoplatz 2 Postfach 21 03 69
D-5000 Köln 21 (DE)

Atlas Fahrzeugtechnik GmbH
Eggenpfad 26
D-5980 Werdohl (DE)

(72) Erfinder : Stwiorok, Andreas
Sportstrasse 17
D-5000 Köln 60 (DE)
Erfinder : Stojek, Dieter, Dr.
In der Krabb 7
D-5060 Bergisch-Gladbach (DE)
Erfinder : Blauhut, Reinhold
Eggenpfad 24
D-5980 Werdohl (DE)
Erfinder : Brandner, Burkhard, Ing. grad.
Bornstrasse 2
D-5980 Werdohl (DE)
Erfinder : Knüfelmann, Manfred
Hörderstrasse 69
D-4000 Düsseldorf (DE)

(74) Vertreter : Hassler, Werner, Dr.
Postfach 17 04 Asenberg 62
D-5880 Lüdenscheid (DE)

EP 0 069 868 B1

Jouve, 18, rue St-Denis, 75001 Paris, France

## Beschreibung

Die Erfindung betrifft ein Nockenwellensteuergerät zur drehzahl- und lastabhängigen Winkelverstellung einer Nockenwelle eines Verbrennungsmotors, wobei durch lineare Verstellung eines Einstellgliedes über ein Verstellgetriebe die Winkelstellung der Nockenwelle gegenüber einem Antriebsrad verstellt wird und wobei ein zahnkranzgesteuerter Impulsgenerator (Zündschaltung), der Zahnimpulse, die jeweils einer Winkeldrehung der Kurbelwelle entsprechen, und außerdem Bezugsimpulse abgibt, die einer Bezugswinkelstellung der Kurbelwelle entsprechen, und ein Lastfühler an eine Logikschaltung angeschaltet sind.

Die Nockenwellen von Verbrennungsmotoren sind normalerweise über Zahnriemen mit der Kurbelwelle gekoppelt und werden daher synchron mit der Kurbelwelle angetrieben. Infolgedessen liegen die Öffnungsphasen der Einlaß- und Auslaßventile sowie auch die Überschneidungswinkel fest. Diese Werte können also nur an einen Durchschnittswert angepaßt werden. Denn es ist bekannt, daß die günstigsten Überschneidungswinkel drehzahl- und lastabhängig sind. Auch die Temperaturabhängigkeit spielt eine Rolle.

Die DE-A-2 909 803 beschreibt ein Nockenwellensteuergerät der eingangs genannten Art. Es ist eine fliehkraftgesteuerte Verstellung einer Schraubhülse innerhalb eines Schraubgetriebes vorgesehen, wodurch eine Winkelverstellung der Nockenwelle gegenüber der Kurbelwelle erreicht wird.

Ein Nockenwellensteuergerät nach der DE-A-2 842 154 sieht ein Planetengetriebe zur Verstellung der Nockenwelle vor. Die Stellwerte werden über eine Steuerung eingegeben, deren Aufbau im einzelnen allerdings nicht erläutert ist.

Ein Nockenwellensteuergerät nach der DE-A-2 525 746 umfaßt ebenfalls ein Überlagerungsgetriebe zur Verstellung der Nockenwelle, dessen Überlagerungseingang durch einen Schrittschaltmotor gesteuert wird. Die analogen Sollwerte und Istwerte werden digitalisiert und dann miteinander verglichen, um einen Stellwert abzuleiten. Entsprechend wird der Schrittschaltmotor nachgeführt.

Ein Nockenwellensteuergerät der eingangs genannten Art ist aus der US-A-3 682 152 bekannt. Dort wird aus den Winkelimpulsen der Kurbelwelle, Lastwerten und Fahrwerten ein analoges Stellsignal für die Nockenwelle errechnet. Es ist also für jede Änderung des Kennfeldes eine Änderung der Rechenschaltung erforderlich. Solche Änderungen erfordern normalerweise Eingriffe in die Hardware und die Software des Systems. Daher ist dieses Nockenwellensteuergerät wenig flexibel.

Aufgabe der Erfindung ist eine solche Ausbildung eines Nockenwellensteuergeräts der genannten Art, daß die jeweiligen Betriebswerte von Drehzahl, Last und anderen Kenngrößen durch logische Operationen digital zu Sollwerten für die Winkelverstellung der Nockenwellen bearbeitet werden, wobei die logischen Verknüpfungen kennfeldunabhängig sind. Insbesondere wird dadurch eine Verstellung des Überschneidungswinkels möglich.

Diese Aufgabe wird nach der Erfindung durch folgende Merkmale der Logikschaltung gelöst :

a) ein Adreßzähler (19) wird jeweils durch die Bezugsimpulse auf Null gestellt und durch die Zahnimpulse weitergeschaltet, so daß am Ausgang des Adreßzählers digitale Adreßsignale bereitstehen, die der momentanen Winkelstellung der Kurbelwelle (2) entsprechen ;

b) ein Korrekturwertspeicher (20) nimmt als Eingangsadressen einerseits die Ausgangssignale des Adreßzählers (19) und außerdem digitale Lastsignale auf und stellt am Ausgang als last- und drehzahlabhängiges Korrektursignal für die Winkelverstellung der Nockenwelle (6, 7) den Speicherwert des betreffenden Adreßplatzes bereit ;

c) ein Stellwertspeicher (22) wird durch ein Zeitbasissignal angesteuert und übernimmt während jeder Betriebsperiode ein entsprechendes Korrektursignal als Stellwertsignal ;

d) das durch das Stellwertsignal des Stellwertspeichers (22) beaufschlagte Einstellgerät (29) weist ein auf einem Gewindeteil (Außengewinde 39) verschraubbares Verstellrad (37) mit einem Außenzahnkranz (37') auf, der von einem oder mehreren Antriebsmotoren (36) antreibbar ist, und das Verstellrad (37) ist mit einem in axialer Richtung verstellbaren Einstellglied (31) gekoppelt.

Die Erfindung unterscheidet sich dadurch in nichtnaheliegender Weise vom Stand der Technik, daß die Digitalwerte von Drehzahl und Last digitalen Speicherwerten für die Winkelverstellung zugeordnet sind. Das Kennfeld ist in Speicheradressen niedergelegt. Auf rechnerische Verknüpfung von Werten wird verzichtet. Dadurch erreicht man eine hohe Anpassungsfähigkeit der Winkelverstellung der Nockenwelle. Es läßt sich ein großes Feld von Korrekturwerten bereithalten. Es ist ohne weiteres möglich, für 64 Drehzahlintervalle und 16 Lastintervalle 1024 Korrekturwerte zur Verfügung zu stellen. Man kann die Zahl der Korrekturwerte sogar verdoppeln. Von den 64 Drehzahlintervallen lassen sich 32 auf das untere Fünftel des Gesamtdrehzahlbereichs und 32 auf die oberen vier Fünftel des Gesamtdrehzahlbereichs verteilen, da eine Korrektur insbesondere im unteren Drehzahlbereich wichtig ist. Es ist jeweils eine Winkelverstellung der Nockenwelle in einem Winkelbereich von 40°, bezogen auf den Kurbelwellenwinkel, nach beiden Seiten möglich. Dadurch lassen sich Überschneidungswinkel bis zu 90° einstellen. Das Einstellgerät wandelt die als Drehbewegung eingegebene Korrekturbewegung in eine lineare Verstellbewegung um.

Ferner sieht die Erfindung vor, daß zwei jeweils ein Teilsignale des Stellwertsignals aufnehmende Ausgangsteilschienen vorgesehen sind, die je einer Nockenwelle für die Steuerung der Einlaßventile bzw. der Auslaßventile zugeordnet sind. Damit lassen sich die Einlaßventile und Auslaßventile gesondert korrigieren, so daß die Steuerung noch weiter verbessert wird.

Ferner ist vorgesehen, daß ein Ansatz des Stellrades in ein Mehrgangpotentiometer eingreift, das ein der axialen Stellung des Verstellrades entsprechendes Signal abgibt. Dadurch läßt sich der Stellweg erfassen und jeweils rückführen, so daß eine Regelung möglich ist.

Ferner ist vorgesehen, daß die Antriebsmotoren für das Verstellrad ein Ritzel mit einer axialen Zahnlänge aufweisen, die dem linearen Verstellweg des Verstellades entspricht. Dadurch ist das Verstellrad ohne zusätzliche Maßnahme immer mit den Antriebsritzeln in Eingriff.

Ferner ist vorgesehen, daß ein Regelkreis für das Einstellgerät vorgesehen ist, der ein dem Stellwertsignal entsprechendes Analogsignal als Sollwert und das Ausgangssignal des Mehrgangpotentiometers als Istwert erhält. Dadurch läßt sich die Regelkennlinie beinflussen und die Regelung optimieren.

Ferner ist vorgsehen, daß eine Nachlaufsteuerschaltung vorgesehen ist, die nach Unterbrechung des Zündstromkreises den Adreßzähler auf Null stellt und für die Dauer einiger Umdrehungen der Kurbelwelle einen Hilfszündstromkreis aufrechterhält. Dadurch ist sichergestellt, daß die Nockenwellen immer in die Grundstellung zurückkehren, so daß beim Anlassen des Verbrennungsmotors keine zusätzliche Belastung für die Antriebsmotoren der Nockenwellenverstellung aufzubringen ist.

Ein Ausführungsbeispiel der Erfindung wird im folgenden unter Bezugnahme auf die anliegenden Zeichnungen erläutert, in denen darstellen :

Figur 1   eine schematische Stirnansicht eines Verbrennungsmotors,

Figur 2   den elektronischen Teil des Nockenwellensteuergeräts und

Figur 3   eine teilweise geschnittene bzw. aufgebrochene Darstellung des Verstellgetriebes für eine Nockenwelle.

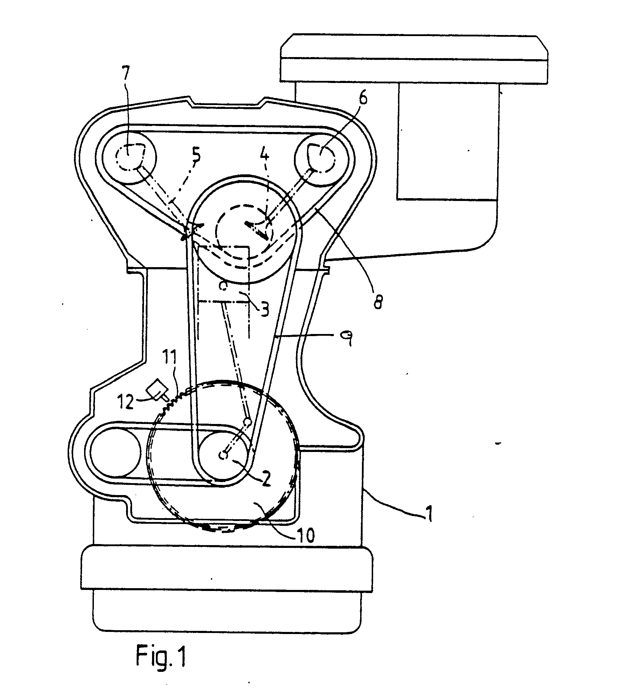

Figur 1   zeigt die Stirnansicht eines Verbrennungsmotors 1. In bekannter Weise sind mit einer Kurbelwelle 2 mehrere Kolben 3 gekoppelt, die sich in entsprechenden Zylinderkammern bewegen. Die Zylinderkammern sind im einzelnen nicht dargestellt. Jede Zylinderkammer besitzt ein Einlaßventil 4 und ein Auslaßventil 5. Die Verbrennung kann durch Vergasung oder Einspritzung nach dem Ottoprinzip oder nach dem Dieselprinzip erfolgen. Die Einlaßventile 4 und die Auslaßventile 5 sind jeweils durch Nockenwellen 6, 7 gesteuert. Der Antrieb der Nockenwellen 6 und 7 erfolgt über Zahnriemen 8 und 9 von der Kurbelwelle 2 aus, so daß die Nockenwellen 6 und 7 jeweils synchron mit der Kurbelwelle 2 umlaufen und eine taktrichtige Steuerung der Einlaßventile 4 und Auslaßventile 5 gewährleisten.

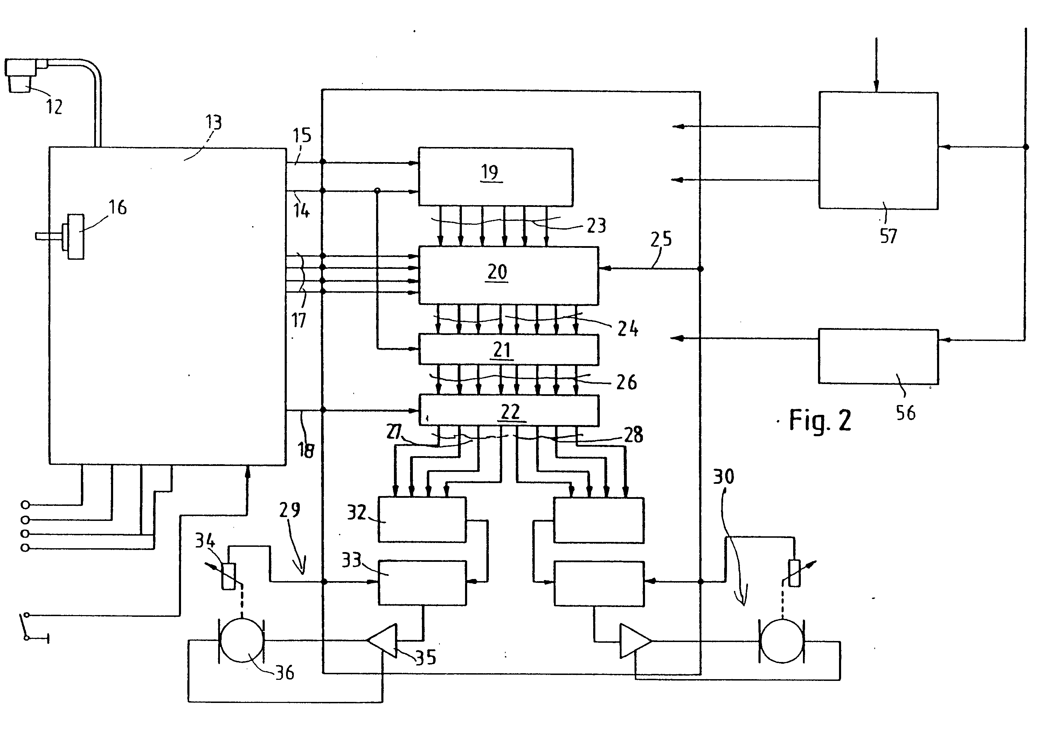

Auf der Kurbelwelle 2 sitzt ein Schwungrad 10, das Zähne 11 aufweist. Diese Zähne 11 wirken mit einem Fühler 12 zusammen, der sogenannte Zahnimpulse abgibt. Die Zahninmpulse sind somit ein Maß für die jeweilige Winkelstellung des Schwungrades 10. Außerdem erzeugt ein Bezugszahn unter der Zähnen 11 in dem Fühler 12 einen Bezugsimpuls. Nach Fig. 2 werden diese Impulse in einer Zündschaltung 13 verarbeitet und geformt. Die geformten Zahnimpulse stehen am Zahnimpulsausgang 14 und die Bezugsimpulse am Bezugsimpulsausgang 15 zur Verfügung. Außerdem ist ein Lastfühler 16 vorhanden, der ein Drucksensor in der Ansaugleitung oder ein Drehmomentmesser sein kann. Der Lastzustand wird auf der Ausgangsschiene 17 durch ein 4-Bit-Lastsignal darsgestellt. Die Zündschaltung 13 gibt außerdem auf dem Ausgang 18 ein Zeitbasissignal ab, dessen Beginn jeweils mit einem Bezugsimpuls zusammenfällt und das eine feste Zeitdauer hat, die ein Bruchteil der Umlaufdauer des Schwungrades bei der höchsten Motordrehzahl ist.

Der Bezugsimpulsausgang 15 und der Zahnimpulsausgang beaufschlagen einen Adreßzähler 19, der durch jeden Bezugsimpuls auf den Nullwert zurückgestellt wird. Der Adreßzähler 19 stellt auf der Ausgangsschiene 23 ein 6-Bit-Adreßsignal bereit, das ein Maß für die jeweilige Winkelphase der Kurbelwelle 2 ist. Das 6-Bit-Adreßsignal und das 4-Bit-Lastsignal beaufschlagen einen Korrekturwertspeicher 20, der matrixartig angesteuert wird und in 1024 Speicherplätzen eine entsprechende Anzahl von Korrekturwerten für die Verstellung der Nockenwelle enthält. Der Gesamtdrehzahlbereich ist in 64 Drehzahlintervalle und der Lastbereich in 16 Lastintervalle aufgeteilt. Die Intervalle können linear oder nichtlinear bemessen sein. Zweckmäßig wird der untere Gesamtdrehzahlbereich in schmalere Intervalle aufgeteilt, da dort genauere Korrekturen erforderlich sind. Bevorzugt wird das untere Fünftel des Gesamtdrehzahlbereichs in 32 Drehzahlintervalle aufgeteilt. Man kann selbstverständlich auch eine größere Anzahl von Speicherplätzen und damit eine größere Anzahl von Korrekturwerten vorsehen. Auf der Ausgangsschiene 24 des Korrekturwertspeichers steht ein 8-Bit-Korrektursignal zur Verfügung.

Eine Signalleitung 25 macht weitere Speicherplätze des Korrekturwertspelchers 20 zugänglich, z. B. zur Bereithaltung von Korrektursignalen, die einer anderen Betriebstemperatur, einer anderen Treibstoffzusammensetzung oder einem anderen Betriebparameter zugeordnet sind.

Die Ausgangsschiene 24 führt zu einem Zwischenspeicher 21, der von dem Zahnimpulsausgang 14 getaktet wird. Eine Ausgangsschiene 26 des Zwischenspeichers 21 führt zu einem Stellwertspeicher 22, der durch das Zeitbasissignal auf der Leitung 18 getaktet wird. Jeweils mit der Rückflanke des Zeitbasissignals wird der an dem Zwischenspeicher 21 anstehende Wert für die Dauer einer Betriebsperiode der Kurbelwelle 2 in

den Stellwertspeicher 22 übernommen. Der Ausgang des Stellwertspeichers ist in Ausgangsteilschienen 27 und 28 für die Nockenwellen der Einlaßventile und der Auslaßventile aufgeteilt, damit die beiden Nolkenwellen gesondert gesteuert werden können. Man hat so für jede Nockenwelle 6, 7 ein 4-Bit-Korrektursignal das eine Korrektur in 16 Stufen ermöglicht. Die Nockenwellen lassen sich jeweils in beiden Richtungen um 40°, bezogen auf die Kurbelwelle, verstellen. Damit läßt sich ein Überschneidungswinkel bis zu 90° einstellen.

Für jede Nockenwelle 6 bzw. 7 ist ein Einstellgerät 29 bzw. 30 vorhanden. Da beide Einstellgeräte funktionsmäßig gleich aufgebaut sind, wird nur ein Einstellgerät in Einzelheiten erläutert.

Das Einstellgerät 29 umfaßt einen Digital-Analog-Wandler 32, der das 4-Bit-Korrektursignal des digitalen Winkelsollwertes in ein Analogsignal umwandelt. Ein Differenzkreis 33 erhält einerseits das Analogsignal als Sollwert für die Nockenwelleneinstellung und andererseits von einem Mehrgangpotentiometer 34 ein Istsignal für die Iststellung der Nockelwelle. Das Differenzsignal wird in eine Motorsteuerschaltung 35 eingespeist, die einen Antriebsmotor 36 steuert. Die Regelkennlinie läßt sich nach Wunsch einstellen, insbesondere zur Unterdrückung von Regelschwingungen.

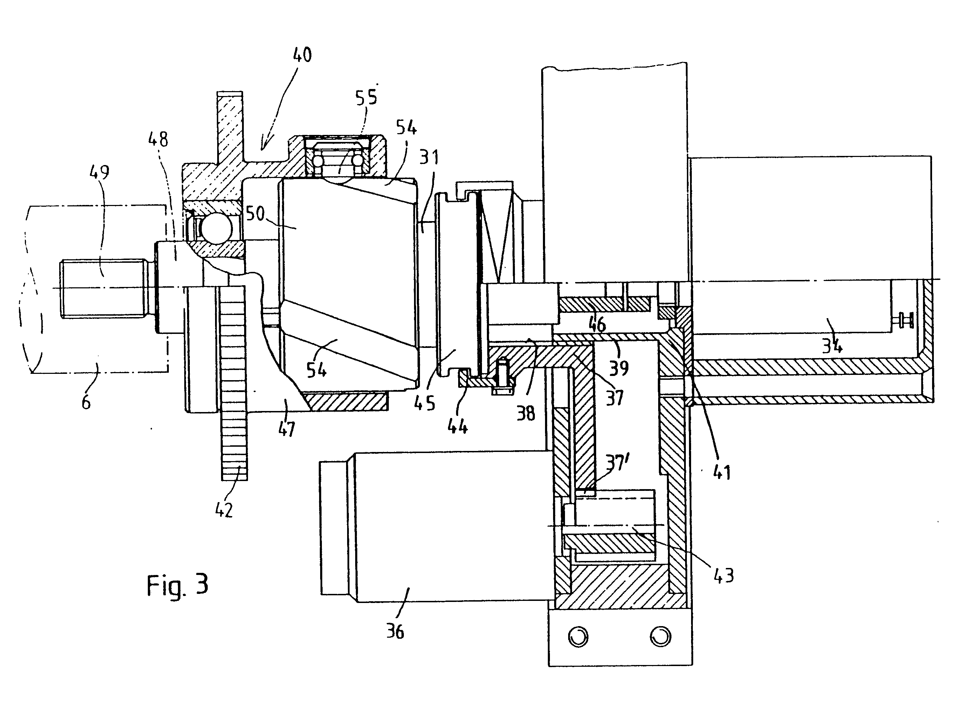

Es wird jetzt auf Fig. 3 Bezug genommen. Jeder Nockenwelle 6 sind z. B. drei Antriebsmotoren 36 zugeordnet, um das notwendige Verstellmoment aufzubringen. In der Zeichnung ist nur ein Antriebsmotor 36 dargestellt. Alle drei Antriebsmotoren 36 wirken auf einen Zahnkranz 37' eines Verstellrades 37, dessen Innengewinde 38 auf einem Außengewinde 39 eines fest angeordneten Trägers 41 schraubend verschiebbar ist. Jeder Antriebsmotor 36 trägt ein Ritzel 43, dessen axiale Länge der Länge des Außengewindes 39 gleich ist, damit das Verstellrad 37 auf dem gesamten Verstellweg mit den Ritzeln 43 in Eingriff ist. An dem Verstellrad 37 sitzt eine Klaue 44, die in einen Ring 45 eines linear verstellbaren Einstellgliedes 31 eingreift.

Das als Schraubgetriebe ausgebildete Verstellgetriebe 40 ist ein Überlagerungsgetriebe. Ein Ringgehäuse 47 trägt das Antriebsrad 42. In dem Ringgehäuse 47 ist eine Innenwelle 48 drehbar gelagert, die mit einem Mitnehmeransatz 49 in die Nockenwelle 6 eingreift. Auf der Innewelle 48 ist eine Muffe 50 in axialer Richtung verschiebbar geführt. Die Muffe 50 ist fest mit dem Einstellglied 31 verbunden. Auf der Umfangsfläche der Muffe 50 sind mehrere Schraubführungen 54 vorgesehen, in die Profilzapfen 55 eingreifen. Die Korrekturbewegung wird als lineare Verstellbewegung des Einstellgliedes 31 eingegeben und auf die Muffe 50 übertragen. Die Muffe 50 wird dadurch schraubend innerhalb des Ringgehäuses 47 verstellt und nimmt dabei drehend die Innenwelle 48 mit. Diese wird also durch die Korrekturverstellung relativ zum Ringgehäuse 47 verdreht, so daß entsprechend eine Korrekturdrehung der Nockenwelle 6 bezogen auf die Kurbelwelle 2 erfolgt. Dadurch ändert sich die Öffnungsphase der angekoppelten Ventile. Durch Verdrehung beider Nockenwellen 6 und 7 kann man auch deren Überschneidungswinkel verändern.

Zur Stromversorgung des Gerätes dient ein Spannungswandler 56.

Außerdem ist ein Nachlaufsteuerschaltung 57 vorgesehen, die nach Unterbrechung des Zündstromkreises zwecks Abstellung des Motors wirksam wird. Diese Nachlaufsteuerschaltung 57 stellt einerseits den Adreßzähler 19 auf Null und hält für die Dauer einiger Umdrehungen der Kurbelwelle einen Hilfszündstromkreis aufrecht. Dadurch wird sichergestellt, daß beim Abstellen des Verbrennungsmotors die Nockenwellen in die Grundstellung zurückgefahren werden. Beim Starten des Verbrennungsmotors werden die Nockenwellen ausgehend von dieser Grundstellung eingestellt. Es wird dadurch vermieden, daß die Antriebsmotoren 36 während der Startphase das Bordnetz belasten.

## Patentansprüche

1. Nockenwellensteuergerät zur drehzahl- und lastabhängigen Winkelverstellung einer Nockenwelle (6, 7) eines Verbrennungsmotors (1), wobei durch lineare Verstellung eines Einstellgliedes (31) über ein Verstellgetriebe (40) die Winkelstellung der Nockenwelle (6, 7) gegenüber einem Antriebsrads (42) verstellt wird und wobei ein zahnkranzgesteuerter Impulsgenerator (Zündschaltung 13), der Zahnimpulse, die jeweils einer Winkeldrehung der Kurbelwelle (2) entsprechen, und außerdem Bezugsimpulse abgibt, die einer Bezugswinkelstellung der Kurbelwelle (2) entsprechen, und ein Lastfühler (16) an eine Logikschaltung angeschaltet sind, gekennzeichnet durch folgende Merkmale der Logikschaltung :

a) ein Adreßzähler (19) wird jeweils durch die Bezugsimpulse auf Null gestellt und durch die Zahnimpulse weitergeschaltet, so daß am Ausgang des Adreßzählers digitale Adreßsignale bereitstehen, die der momentanen Winkelstellung der Kurbelwelle (2) entsprechen ;

b) ein Korrekturwertspeicher (20) nimmt als Eingangsadressen einerseits die Ausgangssignale des Adreßzählers (19) und außerdem digitale Lastsignale auf und stellt am Ausgang als last- und drehzahlabhängiges Korrektursignal für die Winkelverstellung der Nockenwelle (6, 7) den Speicherwert des betreffenden Adreßplatzes bereit ;

c) ein Stellwertspeicher (22) wird durch ein Zeitbasissignal angesteuert und übernimmt während jeder Betriebsperiode ein entsprechendes Korrektursignal als Stellwertsignal ;

d) das durch das Stellwertsignal des Stellwertspeichers (22) beaufschlagte Einstellgerät (29) weist ein auf einem Gewindeteil (Außengewinde 39) verschraubbares Verstellrad (37) mit einem Außenzahnkranz (37') auf, der von einem oder mehreren Antriebsmotoren (36) antreibbar ist, und das Verstellrad (37) ist mit einem in axialer Richtung verstellbaren Einstellglied (31) gekoppelt.

2. Nockenwellensteuergerät nach Anspruch 1, dadurch gekennzeichnet, daß zwei jeweils ein Teilsignale des Stellwertsignals aufnehmende Ausgangsteilschienen (27, 28) vorgesehen sind, die je einer Nockenwelle (6, 7) für die Steuerung der Einlaßventile bzw. der Auslaßventile zugeordnet sind.

3. Nockenwellensteuergerät nach Anspruch 1 oder 2, dadurch gekennzeichnet, daß ein Ansatz (46) des Verstellrades (37) in ein Mehrgangpotentiometer (34) eingreift, das ein der axialen Stellung des Verstellrades entsprechendes Signal abgibt.

4. Nockenwellensteuergerät nach Anspruch 3, dadurch gekennzeichnet, daß die Antriebsmotoren (36) für das Verstellrad ein Ritzel (43) mit einer axialen Zahnlänge aufweisen, die dem linearen Verstellweg des Verstellrades entspricht.

5. Nockenwellensteuergerät nach Anspruch 3 oder 4, dadurch gekennzeichnet, daß ein Regelkreis für das Einstellgerät vorgesehen ist, der ein dem Stellwertsignal entsprechendes Analogsignal als Sollwert und das Ausgangssignal des Mehrgangpotentiometers als Istwert erhält.

6. Nockenwellensteuergerät nach einem der Ansprüche 1 bis 5, dadurch gekennzeichnet, daß eine Nachlaufsteuerschaltung (57) vorgesehen ist, die nach Unterbrechung des Zündstromkreises den Adreßzähler (19) auf Null stellt und für die Dauer einiger Umdrehungen der Kurbelwelle einen Hilfszündstromkreis aufrechterhält.

**Claims**

1. An apparatus for the angular control of a camshaft (6, 7) of a combustion engine (1) according to speed and load conditions, the angular position of the camshaft (6, 7) with respect to the driving wheel (42) being adjusted by a linear adjustment of a control member (31) via a control gear (40), a pulse generator controlled by a toothed rim (ignition circuit 13) and generating tooth pulses corresponding to an angular rotation of the crankshaft (2) and reference pulses corresponding to a reference angular position of the crankshaft (2) and a load sensor (16) are connected to a logical circuit, characterized by the following features of the logical circuit :

a) an address counter (19) is reset by the reference pulses and counted by the tooth pulses so that the output of the address counter provides digital address signals corresponding to the actual angular position of the crankshaft (2) ;

b) the output signals of the address counter (19) and digital load signals are fed as input addresses into a correction value memory (20) the output of which provides the memory value of the respective address position as a correction signal dependent from speed and load conditions for the angular adjustment of the crankshaft (6, 7) ;

c) an adjusting value memory (21) is controlled by a time base signal and stores a respective correction signal used as an adjusting value during every operational period ;

d) an adjusting device (29) fed by the adjusting value of the adjusting value memory (21) has an adjusting wheel (37) rotatably supported by a threaded member (outside thread 39), the adjusting wheel (37) having an outer toothed ring (37') driven by one or several motors (36) and the adjusting wheel (37) is coupled to an adjusting member (31) adjustable in axial direction.

2. An apparatus for camshaft control according to claim 1, characterized in that two output partial buses (27, 28) each leading a partial signal of the adjusting value signal are provided, said partial buses being assigned to the camshafts (6, 7) for controlling the inlet and outlet valves, respectively.

3. An apparatus for camshaft control according to claim 1 or 2, characterized in that a shoulder (46) of the adjusting wheel (37) is coupled to a multi-turn potentiometer (34) which gives a signal corresponding to the axial position of the adjusting wheel.

4. An apparatus for camshaft control according to claim 3, characterized in that the motors (36) for driving the adjusting wheel have pinions (43) the axial tooth length of which corresponds to the linear adjusting motion of the adjusting wheel.

5. An apparatus for camshaft control according to claim 3 or 4, characterized in that the adjusting device has a controlling circuit the set value of which in an analog signal corresponding to the adjusting value and the feedback value of which is the output signal of the multi-turn potentiometer.

6. An apparatus for camshaft control according to one of the claims 1 to 5, characterized in that an after-running control circuit (57) is arranged to reset the address counter (19) after the interruption of the ignition circuit and to maintain an auxiliary ignition circuit for the duration of some revolutions of the crankshaft.

**Revendications**

1. Appareil de commande d'arbre à cames pour l'ajustage angulaire en fonction du nombre de tours et de la charge d'un arbre à cames (6, 7) d'un moteur à combustion (1), la position angulaire de l'arbre à cames (6, 7) par rapport à une roue d'entraînement (42) étant ajustée par un ajustage linéaire d'un organe de réglage (31) par l'intermédiaire d'un mécanisme de réglage (40), un générateur d'impulsions (circuit d'allumage 13) qui est commandé par une couronne dentée et qui délivre des impulsions de dent, qui correspondent chaque fois à une rotation angulaire du vilebrequin (2), ainsi que des impulsions de référence qui correspondent à une position angulaire de référence du vilebrequin (2), et un détecteur de charge (16) étant branchés sur un circuit logique, caractérisé par les particularités suivantes du circuit logique :

a) un compteur d'adresses (19) est chaque fois amené à zéro par les impulsions de référence et avancé par les impulsions de dent de façon à offrir, à la sortie du compteur d'adresses, des signaux d'adresse numériques qui correspondent à la position angulaire instantanée du vilebrequin (2) ;

b) une mémoire de valeur de correction (20) reçoit, comme adresses d'entrée, d'une part les signaux de sortie du compteur d'adresses (19) et en outre des signaux de charge numériques et, à la sortie, elle offre, comme signal de correction dépendant de la charge et du nombre de tours pour l'ajustage angulaire de l'arbre à cames (6, 7), la valeur mémorisée de l'emplacement d'adresse concerné ;

c) une mémoire de valeur de réglage (22) est commandée par un signal de base de temps et, pendant chaque période de service, elle reçoit un signal de correction correspondant à titre de signal de valeur de réglage ;

d) l'appareil de réglage (29) sollicité par le signal de valeur de réglage de la mémoire de valeur de réglage (22) présente une roue de réglage (37) qui peut être vissée sur une pièce filetée (filet externe 39), et qui présente une couronne dentée externe (37') qui peut être entraînée par un ou plusieurs moteurs d'entraînement (36), et la roue de réglage (37) est couplée à un organe de réglage (31) qui peut être ajusté en direction axiale.

2. Appareil de commande d'arbre à cames suivant la revendication 1, caractérisé en ce que deux câblages partiels de sortie (27, 28), qui reçoivent chacun un signal partiel du signal de valeur de réglage et qui sont chacun adjoints à un arbre à cames (6, 7) pour la commande des soupapes d'admission ou respectivement des soupapes d'échappement, sont prévus.

3. Appareil de commande d'arbre à cames suivant l'une des revendications 1 et 2, caractérisé en ce qu'une saillie (46) de la roue de réglage (37) entre en prise dans un potentiomètre multitours (34) qui délivre un signal correspondant à la position axiale de la roue de réglage.

4. Appareil de commande d'arbre à cames suivant la revendication 3, caractérisé en ce que les moteurs d'entraînement (36) de la roue de réglage présentent un pignon (43) ayant une longueur de dent axiale qui correspond à la course de réglage linéaire de la roue de réglage.

5. Appareil de commande d'arbre à cames suivant l'une des revendications 3 et 4, caractérisé en ce que pour l'appareil de réglage est prévu un circuit de réglage qui reçoit un signal analogique correspondant au signal de valeur de réglage, à titre de valeur de consigne, et le signal de sortie du potentiomètre multitours, à titre de valeur effective.

6. Appareil de commande d'arbre à cames suivant l'une des revendications 1 à 5, caractérisé en ce qu'un circuit de commande de poursuite (57), qui, après interruption du circuit de courant d'allumage, amène le compteur d'adresses (19) à zéro et maintient un circuit de courant d'allumage auxiliaire pendant la durée de quelques tours du vilebrequin, est prévu.

Fig. 1

Fig. 2

2

Fig. 3

0 069 868